Europäisches Patentamt

European Patent Office

Office européen des brevets

(11) Veröffentlichungsnummer: **0 246 576**
**B1**

# (12) EUROPÄISCHE PATENTSCHRIFT

(45) Veröffentlichungstag der Patentschrift: 05.09.90

(21) Anmeldenummer: 87107100.7

(22) Anmeldetag: 16.05.87

(51) Int. Cl.⁵: **G 01 B 7/14**

(54) Kapazitives Messsystem.

(30) Priorität: 23.05.86 DE 3617373

(43) Veröffentlichungstag der Anmeldung:
25.11.87 Patentblatt 87/48

(45) Bekanntmachung des Hinweises auf die
Patenterteilung:
05.09.90 Patentblatt 90/36

(84) Benannte Vertragsstaaten:
DE ES FR GB IT SE

(56) Entgegenhaltungen:
DE-C-3 433 351
FR-A-2 496 871
FR-A-2 521 719
FR-A-2 568 004
GB-A-2 063 477
GB-A-2 071 852
US-A-3 628 136

(73) Patentinhaber: MTU MOTOREN- UND
TURBINEN-UNION MÜNCHEN GMBH
Dachauer Strasse 665 Postfach 50 06 40
D-8000 München 50 (DE)

(72) Erfinder: Ding, Kurt, Dr.
Burgfriedenstrasse 7
D-8900 Augsburg (DE)
Erfinder: Knöll, Hartwig, Dr.
Akzazienstrasse 32
D-8047 Karlsfeld (DE)
Erfinder: Wenzl, Josef
Hochstrasse 3
D-8061 Hebertshausen (DE)

## Beschreibung

Die Erfindung betrifft ein kapazitives Meßsystem gemäß dem Oberbegriff des Patentanspruchs 1.

Bei relativ zueinander beweglichen Teilen, wie Bauteilen von Maschinen, insbesondere Turbomaschinen jeder Art, ist es wichtig, den Abstand — Spalt genannt — zwischen den Teilen möglichst genau zu kennen. Bei Turbomaschinen beeinflußt die Größe des Spaltes zwischen Rotorschaufel und Gehäuse die sogenannten Leckverluste, die wiederum unmittelbar auf den Wirkungsgrad der Maschinen durchschlagen.

Mit Hilfe eines kapazitiven Meßsystems, wie es in der deutschen Patentschrift 34 33 351 beschrieben ist, ist es gelungen, ein praktikables Verfahren anzugeben, das störungsfreie Messungen liefert. Von diesem Meßsystem geht die Erfindung aus.

Aus der FR—A 2 568 004 ist eine kapazitive Meßsonde mit triaxialem Aufbau bekannt geworden, die über Ladungsmessungen den Spalt zu einem beabstandeten Gegenstand mißt. Diese Sonde weist eine erhebliche Erstreckung in sondenaxialer Richtung auf, wodurch die Sonde nur an Orten ausreichenden Einbauraumes vorgesehen werden kann.

In FR—A 2 496 871 ist eine Vorrichtung zur kapazitiven Abstandsmessung kleiner Abstände beschrieben. Dabei ist eine metallische Meßfläche auf einem nichtleitenden Träger angebracht, die vorzugsweise aus Gold, Kupfer, Nickel oder Titan besteht. Der Einbau dieser Meßsonde ist schwierig, da entsprechend ausgebildete Ausnehmungen in der die Meßsonde tragenden Gehäusewand vorzusehen sind. Ferner ist eine Verstellung der Meßfläche in sondenaxialer Richtung nicht möglich.

Hiervon ausgehend ist es Aufgabe der Erfindung, eine kompakte Bauform bei gleichzeitig einfacher und exakter Einstellbarkeit der Sonde zu gewährleisten. Dabei soll ferner hohe Meßgenauigkeit und Unempfindlichkeit im Betrieb erzielbar sein.

Die Lösung dieser Aufgabe ist im Anspruch 1 enthalten, weitere Merkmale und weitere Vorteile sind den abhängigen Ansprüchen, der Beschreibung und der Zeichnung von Ausführungsbeispielen zu entnehmen.

Die wichtigsten Vorteile der Erfindung sind:

Der Einbau und die Verbindung der Sonde ist druckdicht gegenüber Fluiden, temperaturunempfindlich, so daß die Meßgenauigkeit nicht beeinflußt wird. Die Meßfläche kann exakt fixiert werden und die Sondenstirnfläche ist an die Gehäusekontur anpaßbar. Der Einbau gegenüber einem festen Anschlag ist justierbar und die Sonde schwingungsunempfindlich festgehalten bzw. gelagert. Die Bauform der neuen Sonde (abgewinkelte Sonde) erlaubt wegen ihrer geringeren Bauhöhe weit mehr Einbaumöglichkeiten. Einbau und Ausbau der Sonde werden erleichtert, somit gewünschtenfalls ein Austausch.

Die neue Meßeinrichtung läßt sich für die Messungen des aktuellen Betriebsspaltes und dessen Regelung für jeweils einzelne Komponenten einer Turbomaschine teilen, jedoch hinsichtlich der Betriebsbedingungen (mehrerer) in optimaler Weise gemeinsam anwenden. Das erfindungsgemäße kapazitive Meßsystem ist sowohl für stationäre als auch für instationäre Messungen geeignet und vor allem auch für die Einzelschaufelmessung.

Das Meßsystem ist auch im Stillstand der Maschine auf einfache und sichere Weise kalibrierbar, z.B. durch Verstellen der Sonde gegenüber einer stehenden Schaufel eines Rotorkranzes und Modulation der Vorspannung ($U_{rel}$). Das Meßsystem ist schwingungsunempfindlich durch aktive Gleichspannungs-Schutzschirmtechnik in Sonde und Kabel. Dadurch, daß die in und aus der Spaltkapazität fließende Ladung gemessen wird, verfälschen Kapazitätsänderungen von Kabel und Sonde, hervorgerufen durch Temperaturschwankungen, nicht das Meßergebnis.

Eine Einzelschaufellängenmessung ist bis zu Schaufelwechselfrequenzen von etwa 50 kHz möglich.

Eine Messung des zeitabhängigen Spaltverlaufs bei transienten Vorgängen (Beschleunigung, Verzögerung) ist möglich.

Die Sonde des Meßsystems ist sehr klein und mit einem flexiblen Anschlußkabel in kleine Gehäuseöffnungen einsetzbar. Sie ist ungekühlt anwendbar bis 600°C. Das Meßsystem ist mit einer schnellen Meßelektronik zur Bestimmung der Signalhöhe der aufeinanderfolgenden Schaufelimpulse versehen und es gestattet eine schnelle Umsetzung der gemessenen Signalhöhe in einen Spaltwert sowie digitale und/oder analoge Ausgabe des Spaltes. Ausfürungsbeispiele der Erfindung sind in den beigefügten Zeichnungen rein schematisch dargestellt. Anhand dieser Zeichnungen erläutert die nachfolgende Beschreibung Ausführungsformen der Erfindung.

Es zeigt:

Fig. 1 den Wirkungsgrad bei Vergrößerungen des Rotorspaltes

Fig. 1a einer Axialturbine und

Fig. 1b eines Radialverdichters,

Fig. 2 Meßsignale, wie sie beim jeweiligen Stand eines beschaufelten Rotorkranzes gegenüber einer Sonde des erfindungsgemäßen Meßsystems erzeugt werden,

Fig. 3 den prinzipiellen Aufbau der Meßkette,

Fig. 4 ein Blockschaltschild von Komponenten der Meßkette,

Fig. 5 eine im Gehäuse eingebaute Sonde mit zugehörigem Rotor in perspektivischer Ansicht,

Fig. 6 einen Schnitt durch eine Sonde zu Fig. 5,

Fig. 7 eine Schnitt durch ein Gehäuse einer Turbomaschine mit eingebauter Sonde.

Fig. 8a einen Schnitt durch eine Sonde zu Fig. 7,

Fig. 8b eine Draufsicht auf eine Sonde zu Fig. 8a,

Fig. 9 eine Anwendung des Meßsystems zur geregelten Spaltkontrolle in Turbomaschinen.

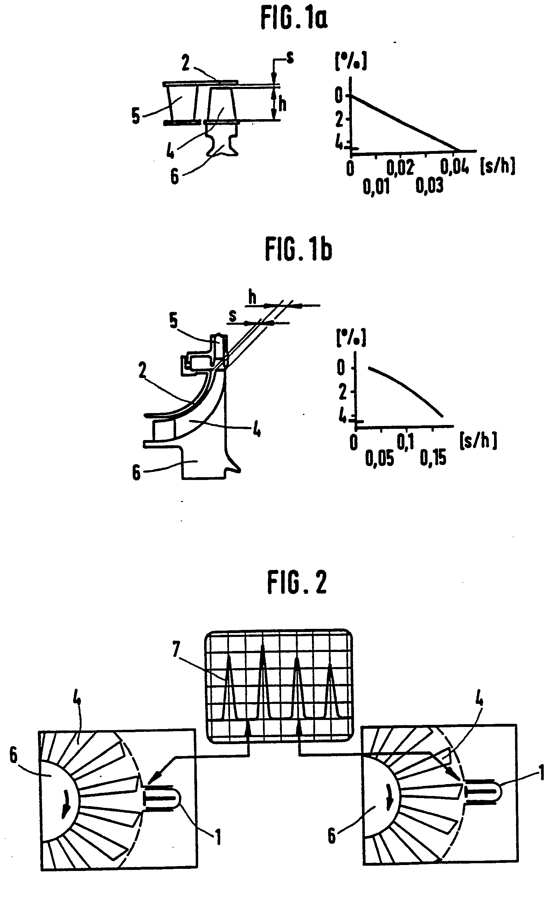

Die Figuren 1—5 sind aus der DE—C—3 433 351 bekannt und dienen nur zur Erläuterung des technologischen Hintergrunds.

Im Beispiel der Fig. 1a ist der Schaufelkranz eines Rotors einer Turbine dargestellt mit einer Länge h der Laufschaufel 4 und einem Spalt s gegenüber dem Gehäuse 2 mit Stator bzw. einem feststehenden Ring von Leitschaufel 5. Daneben ist der Wirkungsgrad-Verlust in % über dem relativen radialen Rotorspalt aufgetragen. In Fig. 1b ist ein Radialverdichter dargestellt mit einem Rotor 6 und außenliegendem Gehäuse 2 gegebenenfalls mit Stator bzw. Leitschraufelring 5. Wie in Fig. 1a ist auch hier die wirksame Schaufellänge mit h und der Spalt des Rotors gegenüber dem Gehäuse mit s bezeichnet. Die nebenstehende Graphik zeigt den Wirkungsgradverlust in % über dem relativen axialen Rotorspalt (s/h). Gleiches gilt nicht nur für Verdichter, sondern auch für Pumpen, Gebläse, Lüfter, Turbolader oder ähnliche Maschinen.

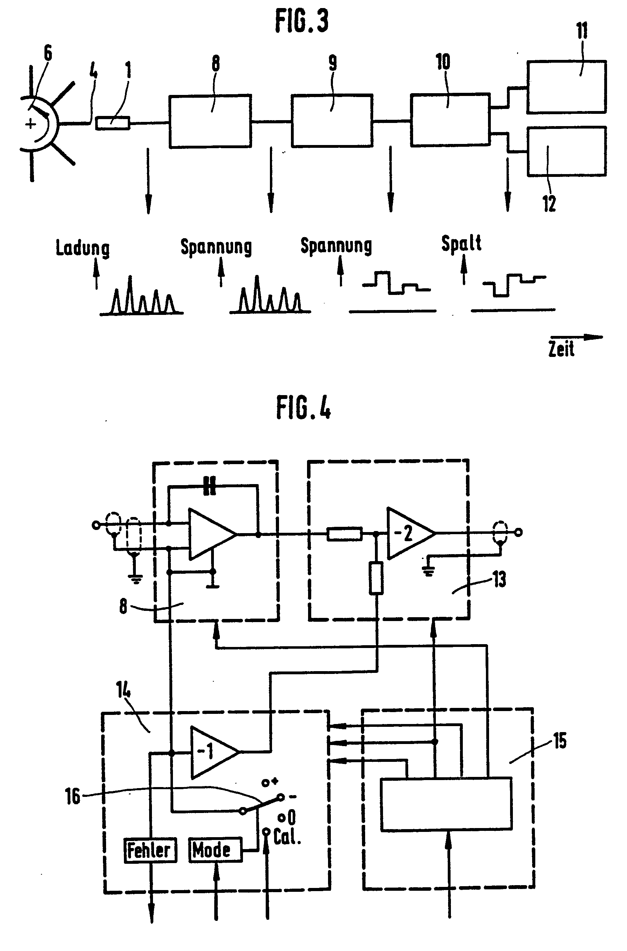

In Fig. 2 ist die Position der Sonde 1 relativ zum Schaufelkranz des Rotors 6 ersichtlich und die damit erzeugten Meßsignale. Im linken Teil der Fig. 2 ist gegenüber der Sonde eine Schaufelbrücke, im rechten Teil der Fig. 2 gegenüber der Sonde eine Schaufelspitze liegend bzw. stehend. Die Drehrichtung des Rotors 6 mit Schaufelkranz ist durch Pfeil angedeutet. Das Ladungsverstärkerausgangssignal 7 und seine Zugehörigkeit zu einer bestimmten Position Schaufel zur Sonde sind ebenfalls durch Pfeil gekennzeichnet. Jeweils in der Mitte einer Lücke ist das Ausgangssignal am kleinsten und bei kleinstem Abstand zwischen Schaufelspitze und Sonde (Spalt) am höchsten (Spannungsspitze). Die in Fig. 3 dargestellte Meßkette besteht (von links nach rechts) aus dem Kondensator, der aus der im Gehäuse bestigten Sonde 1 und der Schaufelspitze 4 gebildet wird und an dem eine Kapazitäts-Ladungskonversion staffindet. Eine Ladungs-Spannungskonversion und die Erzeugung einer Sonderspannung findet statt im Ladungsverstärker 8. Eine Signalformung, eine Spitzenwertmessung und Digitalisierung erfolgt in der Aufbereitungselektronik 9. Ein Ablaufsteuerung sowie die Spaltberechnung erfolgt im Rechner 10 und die Dokumentation der Meßwerte erfolgen z.B. auf einem Drucker 11 oder Linienschreiber 12. Auch andere Datenausgabe und/oder -aufzeichnungs- bzw. Registriergeräte sind anwendbar.

Das in Fig. 4 dargestellte Blockschaltbild zeigt die Ladungsverstärker-Sondenspannungseinheit bestehend aus Ladungsverstärker 8 Differenzverstärker 13, Sodenspannungsquelle 14 und Netzteil 15, welche der Ladungs-Spannungskonversion und der Erzeugung der Sondenspannung dienen.

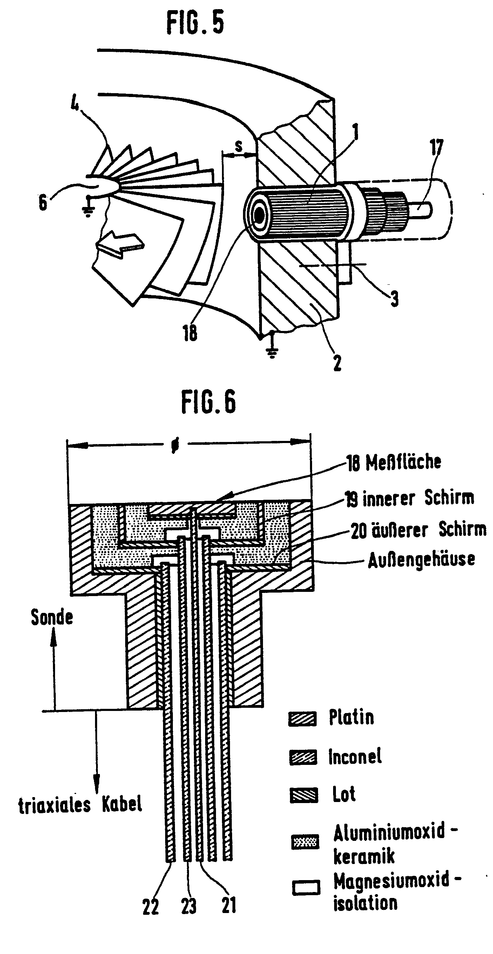

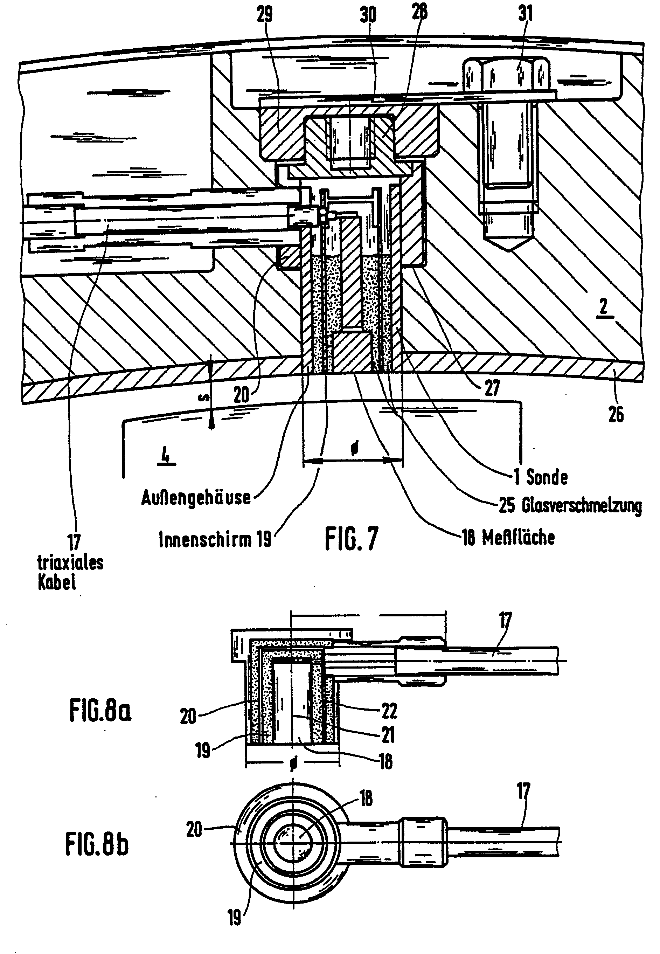

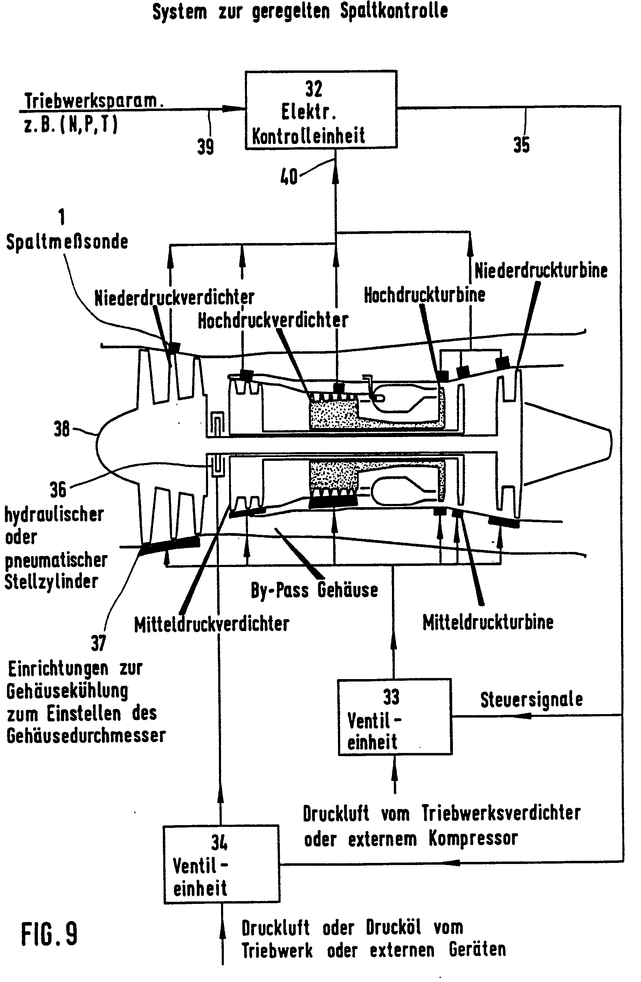

Der Ladungsverstärker und der Differenzverstärker sind zueinander in Serie geschaltet. Die durch den Differenzverstärker maßbezogenen Ausgangssignale des Ladungsverstärkers werden an die Aufbereitungselektronik weitergeleitet. Der Ladungsverstärker 8 ist auch, wie dargestellt, mit dem Sondenspannungsgeber 14 verbunden. In Fig. 5 sowie Fig. 7 sind räumliche Sondenanordnungen im Gehäuse einer Turbomaschine ersichtlich. Die Zuordnung zum Rotor ist in Fig. 5 perspektivisch dargestellt. Man erkennt deutlich die aktive Sondenfläche und die triaxiale Anordnung von Elektroden und Isolationsschichten. Die Sonde ist im Gehäuse der Maschine kalibrierbar angebracht in einem Sicherheitsabstand zur längsten Schaufel. Es ist der Spalt zwischen Rotor (hier Schaufelspitzen) und Gehäuse bezeichnet. Fig. 6 zeigt eine Sonde 1 in Fig. 5 mit Materialangaben.

In Fig. 7 ist die Sonde in einem mehrteiligen Gehäuse eingesetzt. Die Sonde hat das Bezugszeichen 1 und ihr Halter das Bezugszeichen 30, während das Gehäuse das Bezugszeichen 2 besitzt. Der Abstand zur Schaufelspitze des rotierenden Kranzes 6 ist mit "S" bezeichnet, die Laufschaufel mit 4 und eine Leitschaufel mit 5. (vgl. Fig. 1a).

Es ist ersichtlich, daß die Sonde 1 klein und leicht einbaubar und anschließbar ist. So betrug z.B. der in Fig. 6 gezeigte Sondendurchmesser etwa 10 mm und die Höhe derselben war noch geringer. Ein Anschlußkable kann direkt an die Sonde auf der der Schaufelspitze abgekehrten Seite angeschlossen werden, insbesondere unter einem Winkel von 90° zur Achse der Sonde. Bevorzugt wird die Ladungsverstärkereinheit (in Fig. 4 dargestellt) in einem robusten Spezialgehäuse untergebracht zusammen mit dem Regler für die Sondenspannung und der Stromversorgung (Netzteil). Ist der Spaltkondensator mit einer konstanten Gleichspannung $U_{ref}$ gegenüber dem Rotor vorgespannt, so wird die aktive Sondenfläche bei jedem Schaufeldurchgang elektrisch aufgeladen und entladen.

Ist die aktive Sondenfläche 18 bei dem Meßsystem an den Ladungsverstärker angeschlossen, so wird an dessen Ausgang ein Spannungssignal $U_A$ erzeugt, das ein Maß für die Ladungsmenge Q ist, die dessen Eingang zugeführt oder entzogen wird.

Die maximale Ladungsmenge $Q_{imax}$ jedes Schaufelwechsels ist abhängig von der Kapazität des Spaltkondensators $C_{si}$ und damit von Abstand $d_i$ der individuellen Schaufel 4 von der Sonde 1 entsprechend der Gleichung:

$$Q_{imax} = U_{ref} \times C_{si} = U_{ref} \times f(di)$$ gibt den Zusammenhang zwischen Spalt und Kapazität an, der durch Kalibrierung ermittelt wird.

Da der Ladungsverstärker 8 durch ein triaxiales Kabel 17 abgeschirmt an die Sonde 1 angeschlossen wird, bei dem Seele und Schutzschirm auf gleichem Potential liegen, wird eine Eigenkapazitätsänderung von Sonde oder Kabel im Bereich zwischen Schutzschirm und Seele der Sonde 1 vom Ladungsverstärker 8 nicht registriert, da keine Ladungsverschiebung durch Umladung auftritt, denn dieser Bereich des Kondensators liegt mit beiden Seiten auf gleichem Potential, d.h., daß nur die Kapazität des Spaltkondensators erfaßt wird, die sich in Abhängigkeit von Abstand zwischen Sonde 1 und Schaufel 4 verändert. Die Sonde 1 ist möglichst nahe dem beweglichen Teil 4 angeordnet. Der Abstand zwischen Sonde 1 und längster Schaufel 4 ist jedoch frei wählbar. Wird er jedoch möglichst klein gehalten, erhöht sich dadurch die Empfindlichkeit der Meßeinrichtung.

Die Meß- und Stirnfläche 18 der Sonde 1 kann auch an die Innenkontur des Gehäuses 2 angepaßt werden, wenn diese z.B. von einer ebenen Fläche abweicht.

Die im Gehäuse 2 eingebaute Sonde 1 bildet zusammen mit der Schaufelspitze 4 den Spaltkondensator, dessen Plattenabstand gemessen und angezeigt werden soll. Bei bekannter Position der aktiven Sondenfläche 18 im Gehäuse ergibt sich aus dem Plattenabstand unmittelbar der Rotorspalt "S".

Die Ladungsmenge am Spaltkondensator wandelt der Ladungsverstärker 8 mit hoher Frequenzbandbreite in das in Fig. 2 angedeutete Spannungssignal 7. Die Bandbreite des Ladungsverstärkers 8 ist dabei auf den Frequenzinhalt des zu erwartenden Ladungssignals mit Vorteil abgestimmt. Um die obere Grenzfrequenz des Ladungsverstärkers nicht zu verringern, ist es vorteilhaft, das Sondenschlußkabel 17 möglichst kurz zu halten.

Die Aufbereitungselektronik 9 hat die Aufgabe, nach Filterung und Verstärkung des Signals den Spitzenwert jedes Schaufelwechselimpulses einzeln zu vermessen und zu digitalisieren. Die ermittelten Pulsamplitudenwerte werden dann als Bits dem Rechner 10 parallel übergeben.

Der Rechner 10 steuert den Ablauf der Messung entsprechend der vom Benutzer gewählten Betriebsart und rechnet die Meßwerte (Volt) in Spaltwerte s (in mm) µm.

Als Betriebsart lassen sich wählen (bei 16):
a) stationäre Messung
b) instationäre Messung
c) Einzelschaufelmessung
d) Kalibrierung

Stationärer und instationärer Meßbetrieb sind zu unterscheiden. Wenn man die Messung zweimal mit unterschiedlicher Polarität der Sondenspannung durchführt und danach den arithmetischen Mittelwert bildet, erhält man einen von der Sondenvorspannung abhängigen Spaltsignalwert auch bei schlechter Erdung des Rotors. Die Umpolung der Sondenvorspannung sollte mit dem jeweiligen Anwendungsfall angepaßter Taktfrequenz durchgeführt werden. Diese läßt sich jeweils in Versuchen leicht ermitteln und zwar unterschiedlich für stationäre und instationäre Messungen. Bei der stationären Betriebsart kann nach einer vorwählbaren Zeitspanne die Sondenvorspannungspolarität automatisch gewechselt werden. Bei der instationären Betriebsart kann die Polaritätsumschaltung z.B. während schneller Beschleunigungs- oder -vorzögerungsphasen der Maschine unterbrochen werden. Es wird dann bei einem einmaligen Umschaltvorgang ein Korrekturfaktor bestimmt. Der Rechner verarbeitet diesen Korrekturfaktor automatisch bei mit einer Polarität aufgenommenen Spaltsignalwerten in diesem Beispiel.

Als Meßergebnis kann der Rechner unabhängig von der Betriebsart den kleinsten Spalt pro Umlauf, den größten Spalt oder auch den mittleren Spalt angeben. Ebenso ist die Einzelschaufelmessung möglich, bei der die Spaltwerte für jede Schaufel des Umfanges ermittelt und aufgelistet werden. Die Ausgabe der Meßergebnisse ist je nach stationärer und instationärer Messung unterschiedlich.

Bei einer Messung vorhergehenden Kalibrierung wird wie folgt verfahren:

Die Sonde 1 wird relativ zum Gehäuse 2 in Richtung auf das bewegliche Teil wie Rotorkranz 6 mit vorstehender Schaufel verschoben. Durch periodische Modulation der Frequenzspannung (Sondenvorspannung) wird der Kondensator bestehend aus Sonde und Schaufel umgeladen und es wird eine Kalibriersignal erzeugt. Abwandlungen der oben beschriebenen Ausführungsbeispiele können vorgenommen werden. Auch andere Anwendungen als vorher beschriebenen lassen sich durchführen. Das Meßsystem kann voll automatisiert werden hinsichtlich Steuerung, Auswertung, Fehlerüberwachung und es ist mehrkanalig zu betreiben. Die Erfindung ist auch nich auf die Anwendung in Stromungsmaschinen beschränkt, sondern allgemein bei Kraft- und Arbeitsmaschinen anwendbar sowie als Abstandsmeßsonde in Werkzeugmaschinen bzw. Handhabunghssystemen wie Roboter, elektrische Maschinen, auch auf Maschinen wie Elektromotoren, -generatoren zur optimale Spalteinstellung zwischen Rotor und Stator. Dadurch läßt sich deren magnetischer Wirkungrade verbessern. Ersichtlich kann die erfindungsgemäße Sonde 1 sowohl in Achsrichtung (Fig. 6) als auch abgewinkelt (90° für Fig. 8a und 8b) augeführt, bzw. mit dem triaxialen Kabel 17 verbunden werden. Die hier letzgenannte Ausführung wird bevorzugt. Drei Ausführungsformen sind möglich.

a) Sonde: Isolator aus Glas, Metallteile aus Vacon (Inconel) 21—23
Verbindung Isolator — Metall durch Glasverschmelzung 25
Kabel: flexibles Teflonkabel
Verbindung Sonde — Kabel: Weichlöten, Crimpen
Einsatztemperatur bis 250 Grad C (Fig. 7)
b) Sonde wie a)
Kabel: mineralisoliertes Metallmantelkabel ($Al_2O_3$ und $M_gO$)
Verbindung Sonde — Kabel: Hartlöten, Schweißen
(Fig. 8a + b).
Einsatztemperatur bis 400 Grad C.
c) Sonde: Isolator aus Aluminiumoxidkeramik 19, 20
Metallteile aus Platin (Meßfläche 18)
Verbindung Isolator — Metall: Vakuumlötung
Kabel: mineralisoliertes Metallmantelkabel (z.B. der Firma BICC)
Verbindung Sonde — Kabel: Vakuumlöten, Hartlöten mit Lot 24.
Einsatztemperaturbereich bis 750 Grad C (Fig. 6).

In Fig. 7 ist innen auf der Gehäusewand ein Belag 26 mit guten Einlaufeigenschaften gegenüber den Spitzen der Schaufel 4 vorgesehen. Das Sondengehäuse 20 ist bis zu einen Anschlag 27 in Richtung auf die Schaufel 4 verstellbar und feststellbar mittels einer Schraube 28 die in einem Kopf 29 angeordnet ist, der mittels Halteplatte 30 und Schraube 31 an der Wand 2 des Turbinengehäuses befestigt ist.

Die Nachteile bekannter Sonden sind:

koaxialer Aufbau: dadurch hohe Streukapazität und hohe Empfindlichkeit gegen Vibrationen

große Bauform (Durchmesser, Höhe): dadurch beschränkte Einbaumöglichkeiten

geringer Einsatztemperaturbereich aufgrund der verwendeten Isolatormaterialien: bei erhöhter Temperatur geringe Festigkeit und geringer elektrischer Isolationswiderstand

geringe Meßgenauigkeit bei weitem Einsatztemperaturbereich, da Isolatormaterialien mit hohem thermischen Ausdehnungskoeffizienten verwendet werden

Die Vorteile der neuen Sonde sind:

triaxialer Aufbau: dadurch geringe Streukapazität, da der innere Schrim aktiv auf dem Potential der Meßfläche gehalten werden kann; geringe Empfindlichkeit gegen Vibrationen

kleine Bauform (Durchmesser, Bauhöhe): weite Einsatzmöglichkeit

verwendete Isolatormaterialien und Verbindungstechniken: weiter Einsatztemperaturbereich, hohe Festigkeit, druckdicht bis zu hohen Drücken (40 bar), hoher elektrischer Isolationswiderstand (größer 500 kOhm) über vollen Temperaturbereich, hohe Meßgenauigkeit durch exakte Fixierung der Meßfläche mit Materialien mit geringem thermischen Ausdehnungskoeffizienten

Sondenstirnfläche anpaßbar an Gehäusekorrektur: nach Fertigstellung der Sonde kann die Stirnfläche an die Gehäusekontur angepaßt werden ohne Beeinträchtigung der elektrischen und mechanischen Eigenschaften der Sonde

Kabelanschluß in Geradeaus- oder 90°-Ausführung möglich: dadruch hohe Flexibilität bei Anpassung an die Gehäusegegebenheiten

Kabel integraler Bestandteil der Sonde; bei Hochtemperaturversion Sondenteil und Kabel in einem Vakuumlötvorgang verbunden: dadurch hohe Zuverlässigkeit.

**Beispiel der Anwendung der Erfindung bei einer geregelten Spaltkontrolle (ACC) in Gasturbinen (Fig. 9)**

Der Wirkungsgrad von Turbomaschinen (Strahltriebwerk, Wellenleistrungtriebwerk; stationär oder fliegend) wird wesentlich beeinflußt durch die Größe der Rotorspalte (Spalt zwischen Rotorschaufelspitze und Gehäuse; Statorschaufelspitze und Welle) (Fig. 1a + 1b). Eine Minimierung dieser Spalte für alle Betriebzustände der Maschine (stationär/instationär; Teillast/Vollast) und über die gesamte Laufzeit der Maschine führt zu einer erheblichen Wirkungsgradverbesserung. Das momentane Verfahren der gesteuerten Spaltkontrolle in Triebwerksturbinen durch Gehäusekühlung hat folgende Nachteile:

Der Spalt läßt sich nur in stationären Betriebspunkten minimieren nach einer langen Stabilisierungszeit; sonst besteht die Gefahr des Anstreifens der Rotoren am Gehäuse;

Durch Verschleiß verändert sich der Zusammenhang zwischen Triebwerksparametern die zur Spaltsteuerung benötigt werden und dem aktuellen Rotorspalt; deshalb ist der Spalt nicht optimal über die gesamte Betriebsdauer der Maschine steuerbar, da die Änderung dieses Zusammenhanges nicht erfäßt werden kann.

Das neue Verfahren beruht auf folgendem:

Messung des aktuellen Betriebsspaltes für die einzelnen Komponenten (Verdichter, Turbine; Niederdruck, Hochdruck axial oder radial) des Triebwerkes 38 z.B. durch das kapazitive Spaltmeßsystem nach der DE 3433351 Cl.

Verarbeitung des Spaltinformation zusammen mit weiteren Triebwerksparametern in einer elektronischen Einheit 32 (evtl. mit Microprozessor gesteuert) und Ansteuerung einer Ventileinheit 33, 34.

Minimierung der Spalte getrennt für die einzelnen Komponenten (Wand-) durch Gehäusekühlung 37 oder durch axialen Wellenversatz bei konischen Gehäusen mit Hilfe eines Stellzylinders 36; Steuerung (pneumatisch) über die Ventileinheit 33, 34, die mit der Steuereinheit 32 (Regler) über Steuerleitungen 35 verbunden sind.

**Patentansprüche**

1. Kapazitives Meßsystem zur Messung des Spaltes zwischen zwei relativ zueinander beweglichen Teilen, mit einer Sonde (1) mit Meßfläche (18) und einer Auswerteeinrichtung (8, 9, 10) für die Meßwerte, wobei die Sonde (1) in einer Gehäusewand (2) angeordnet ist und über ein triaxiales Kabel (17) mit jeweils gegenseitig mittels Glas oder Keramik isolierten Leitern (21, 22, 23) angeschlossen ist, und die Meßfläche (18) und eine ihr gegenüberliegendes Teil (4), die durch den zu bestimmenden Spalt (s) getrennt sind, einen vorgespannten Kondensator bilden, wobei die Meßfläche (18) aus einem Metall oder einer Legierung mit einem Metall der Platingruppe gebildet ist, dadurch gekennzeichnet, daß die Meßfläche (18) durch ein Hochtemperaturlot oder durch Schweißung mit der Seele (21) des triaxialen Kabels (17) verbunden ist, und die Sonde (1) an ihrem dem Spalt abgekehrten Ende mit dem triaxialen Kabel (17) winklig (90°) verbunden und in die Gehäusewand (2) eingesetzt ist, und zur Bildung einer baulichen Einheit mit einem Auswertverstärker (8) und einem Spannungserzeuger (13, 14, 15) verbunden ist.

2. Kapazitives Meßsystem mit einer Sonde nach Anspruch 1, dadurch gekennzeichnet, daß die Meßfläche (18) und die gesamte Oberfläche eben bzw. bündig mit der Komponentenwand oder einem Belag (26) auf dieser Wand (2) angeordnet ist.

3. Anwendung eines kapazitiven Meßsystems mit einer Sonde nach Anspruch 1 oder 2, bei einer Maschine zur aktiven Spaltregelung (ACC) von Komponenten eines Stators gegenüber Komponenten (Flächen) eines Rotors.

**Revendications**

1. Système de mesure capacitif pour mesurer l'intervalle entre deux pièces mobiles l'une par rapport à l'autre, comportant une sonde (1) avec une surface (18) et un circuit d'exploitation (8, 9, 10) des grandeurs de mesure, la sonde (1) étant logée dans une paroi de boîtier ou de carter (2) en étant reliée par un câble coaxial (17) à des conducteurs (21, 22, 23) isolés respectivement par du verre ou de la matière céramique, et la surface de mesure (18) et une pièce (4) en regard de celle-ci et qui sont séparées par un certain intervalle (s), forment un condensateur soumis à une tension prédéterminée, la surface de mesure (18) étant en un métal ou un alliage avec un métal du groupe du platine, système caractérisé en ce que la surface de mesure (18) est reliée par une brasure à haute température ou par une soudure à lame (21) du câble triaxial (17), la sonde (1) est reliée, à son extrémité opposée à intervalle, au câble triaxial (17) de manière coudée (90°) et est logée dans la paroi du boîtier, cette sonde est raccordée à un circuit d'exploitation (8) et à un générateur de tension (13, 14, 15) pour former un ensemble constructif.

2. Système de mesure capacitif comportant une sonde selon la revendication 1, caractérisé en ce que la surface de mesure (18) et l'ensemble de la surface sont plans ou à fleur de la paroi du composant ou sont logés dans un revêtement (26) prévu sur cette paroi (2).

3. Application d'un système de mesure capacitif avec une sonde selon la revendication 1 ou 2 dans une machine pour la régulation active de l'intervalle (ACC) des composants d'un stator par rapport aux composants (surfaces d'un rotor).

**Claims**

1. Capacitive measuring system for measuring the gap between two parts which are movable relative to each other, with a probe (1) with a measuring surface (18) and an evaluating device (8, 9, 10) for the measurement values, wherein the probe (1) is arranged in a housing wall (2), and is connected by way of a triaxial cable (17) to respective mutually insulated conductors (21, 22, 23) by means of glass or ceramics, and the measuring surface (18) and a part (4) lying opposite it, which are separated by the gap (s) to be determined, form a biassed capacitor, wherein the measuring surface (18) is formed of a metal or alloy with a metal of the platinum group, characterised in that the measuring surface (18) is connected by a high temperature solder or by welding with the core (21) of the triaxial cable (17), and the probe (1) on its end facing away from the gap is connected at an angle (90°) with the triaxial cable (17) and inserted in the housing wall (2), and, for forming a structural unit, is connected to an evaluator amplifier (8) and a voltage generator (13, 14, 15).

2. A capacitive measuring system with a probe according to claim 1, characterised in that the measuring surface (18) and the whole surface is arranged plane or flush with the component wall or a layer (26) on this wall (2).

3. A use of a capacitive measuring system with a probe according to claim 1 or 2, with a machine for active gap regulation (ACC) of components of a stator relative to components (surfaces) of a rotor.

## FIG.1a

## FIG.1b

## FIG. 2

## FIG.3

Ladung Spannung Spannung Spalt

Zeit

## FIG.4

Fehler Mode Cal.

# FIG.5

# FIG.6

18 Meßfläche
19 innerer Schirm
20 äußerer Schirm
Außengehäuse

Sonde

triaxiales Kabel

▨ Platin

▨ Inconel

▨ Lot

▨ Aluminiumoxidkeramik

☐ Magnesiumoxidisolation

3

FIG. 7

17 triaxiales Kabel

Außengehäuse

Innenschirm 19

1 Sonde

25 Glasverschmelzung

18 Meßfläche

FIG.8a

FIG.8b

4

**EP 0 246 576 B1**

## System zur geregelten Spaltkontrolle

**Triebwerksparam.**
**z.B.(N,P,T)**

**32 Elektr. Kontrolleinheit**

39

40

35

**1 Spaltmeßsonde**

**Niederdruckverdichter**

**Hochdruckverdichter**

**Hochdruckturbine**

**Niederdruckturbine**

38

36
**hydraulischer oder pneumatischer Stellzylinder**

37
**Einrichtungen zur Gehäusekühlung zum Einstellen des Gehäusedurchmesser**

**Mitteldruckverdichter**

**By-Pass Gehäuse**

**Mitteldruckturbine**

**33 Ventil-einheit**

**Steuersignale**

**Druckluft vom Triebwerksverdichter oder externem Kompressor**

**34 Ventil-einheit**

**FIG. 9**

**Druckluft oder Drucköl vom Triebwerk oder externen Geräten**

5